# EUROPEAN PATENT APPLICATION

(11) **EP 1 683 844 A1**
(43) Date of publication of application: **26.07.2006**
(21) Application number: 06250150.7
(22) Date of filing: 12.01.2006
(51) Int. Cl.: C09J 5/06, F16L 41/08, F16L 41/06, B29C 65/34, B29C 65/64

(54) **Joining metal and plastics surfaces**

(30) Priority: 25.01.2005 GB 0501453
(71) Applicant: Uponor Innovation AB, 513 81 Fristad (SE)
(72) Inventor: Bowman, Jeremy, Derbyshire S40 3NA (GB); Christodoulou, Mario, Nottinghamshire NG18 4HL (GB)
(74) Representative: Stainthorpe, Vanessa Juliet

(57) **Abstract**

A method for joining a metal surface to a plastics surface, which comprises disposing between the surfaces a hot melt adhesive and an electric heating element, and energising the electric heating element to activate the hot melt adhesive and form an adhesive bond between the metal surface and the plastics surface.

## Description

This invention relates to joining metal and plastics surfaces, and more particularly to the joining of plastics pipes to metal fittings, and of metal pipes to plastics fittings. In a further aspect, the invention relates to a saddle and tapping tee assembly adapted to be mounted on a plastic pipeline to facilitate the connection of a branch pipe thereto.

### BACKGROUND

The joining of metal and plastics surfaces is a problem in many industries, and particularly in the pipeline industry, where it is frequently necessary to make an in-line joint between a plastics pipe and a metal fitting or between a metal pipe and a plastics fitting. Typically in such cases the pipe and fitting are provided with flanges that are coupled together by bolts or mechanical clamps. Alternatively ductile plastics such as polyethylene can be compressed using an external clamp and an internal spigot. These joints are frequently not secure, however, particularly at higher pressures, or in corrosive environments, or where the joint is subjected to soil stress forces.

Bell and spigot arrangements for connecting plastics pipes are disclosed in US4436988, US4508368 and US4852914. In these joint configurations the bell connector has an enlarged diameter to receive the pipe spigot and an electrical heating coil embedded in a fusible thermoplastic sheath is disposed between them. When the heating coil is energised a fusion bond is formed between the plastics bell and spigot. This method cannot be applied to joints between plastics pipes and metal fittings, however, because the fusible thermoplastic material will not fuse to the metal surface.

A profiled sheathed wire for forming into an electrical resistance welding insert is disclosed in US5107098. In this case the fusible thermoplastic sheath is polyethylene. Again this method cannot be applied to joints between plastics pipes and metal fittings because the metal surface will not weld to the polyethylene.

It is also known to heat thermoset compositions by incorporating a heating agent such as conductive ferromagnetic particles or fibres in the composition and subjecting the composition to inductive heating. A review of patents in this area is included in US6677559. Such methods cannot be applied to metal fittings due to the danger of overheating.

A tapping tee is a fitting that is mounted on a pipeline to enable a cutter to travel through the fitting in order to cut a hole in the pipeline. Typically the tapping tee is provided with a body having a through bore and means for connecting a branch pipe thereto so that fluid can pass from the pipeline to the branch pipe when the cutter is withdrawn.

Many types of tapping tee are known in the art for attachment to plastics pipelines. The tapping tee can be, for example, a metal fitting provided with a metal saddle that is mounted on the pipeline and maintained in position by means of a split-ring mechanical clamp. Examples of tapping tees of this type are described in US5425395, US4809735, US4018464 and US4730636. In other arrangements, where the tapping tee and the pipeline are made from the same plastics material, the body and the saddle of the tee are made from fusible plastics material and the saddle is bonded to the pipeline by electrofusion, for example, as described in GB2310264, GB1294200, WO02/44608, US4933037, US4894521, US5104468 and US4806181.

The entire disclosures of all the abovementioned patents are incorporated herein by reference for all purposes.

In heavily polluted environments, plastics pipelines are provided with an internal metal layer, usually aluminium, which prevents external pollutants such as hydrocarbons from entering the pipeline by diffusion through the pipe wall. Such polluted environments are not suitable for plastics tapping tees, due to the risk of pollutants entering the pipeline by diffusion through the tapping tee, and therefore electrofusion of the saddle to the pipeline is not an option. Environmentally resistant metal fittings and bulky mechanical clamps are therefore used for this application. However, in addition to the extra costs involved, metal fittings also suffer from the disadvantage that the mechanical clamp needs to apply a considerable pressure to the plastics pipe in order to achieve an adequate seal between the saddle and the pipeline and resist the forces involved in cutting a hole in the pipe wall. The danger of over-tightening the mechanical clamp is very real, and there have been many instances of slow crack propagation of the plastics pipe, leading to failure of the pipeline.

There is accordingly a need for an improved system for joining metal and plastics surfaces, in particular for connecting plastics pipes to in-line metal fittings, and for connecting a tapping tee that can be used in a polluted environment to a plastics pipe, which can obviate the difficulties encountered heretofore.

### BRIEF SUMMARY OF THE DISCLOSURE

The present invention provides a method for joining metal and plastics surfaces using a hot melt adhesive. The invention also provides a bonding member for connecting a plastics pipe to a metal pipe or fitting. The invention further provides a saddle for an environmentally resistance tapping tee assembly, by which the tee can be mounted on a pipeline by the use of a hot melt adhesive.

In a first aspect, the invention provides a method for joining a metal surface to a plastics surface, which comprises disposing between the surfaces a hot melt adhesive and an electric heating element, and energising the electric heating element to activate the hot melt adhesive and form an adhesive bond between the metal surface and the plastics surface.

In a second aspect, the invention provides a tubular bonding member for forming a joint between a plastics pipe and a metal pipe or fitting, the bonding member comprising:
(a) a hot melt adhesive capable of bonding to a metal surface, or to both a metal and a plastics surface; and
(b) a fusible polymeric material capable of bonding or fusing to a plastics surface,
   the bonding member having an electric heating element disposed adjacent thereto or embedded therein.

In a third aspect, the invention provides an assembly of a metal fitting and a plastics pipe, wherein there is disposed between the fitting and the pipe a hot melt adhesive member, the hot melt adhesive member having disposed adjacent thereto or embedded therein an electric heating element.

In a fourth aspect, the invention provides a metal saddle for an environmentally resistant tapping tee assembly, wherein the saddle is provided with an electric heating element and proximate thereto a layer of hot melt adhesive and a layer of fusible polymeric material, whereby the saddle can be mounted on a plastics pipeline.

In a fifth aspect, the invention provides a method of mounting an environmentally resistant tapping tee assembly on a plastics pipeline, which comprises mounting a metal saddle on the pipeline by activating a layer of a hot melt adhesive disposed between the saddle and the pipeline with an electric heating element.

In a sixth aspect, the invention provides a tapping tee assembly comprising a metal saddle of the fourth aspect of the invention.

In a preferred embodiment of the first aspect of the invention, the hot melt adhesive forms an adhesive bond directly between the surfaces of a metal saddle and a plastics pipeline.

In a preferred embodiment of the second aspect of the invention the electric heating element comprises a coil of electric resistance wire and adjacent turns of the coil are embedded in the hot melt adhesive and the fusible polymeric material.

In a preferred embodiment of the fourth aspect of the invention, the hot melt adhesive in use forms an adhesive bond between the metal saddle and an electrofusion mat, the mat comprising the electric heating element embedded in the layer of fusible polymeric material, and the electrofusion mat in use forms a fusion bond between itself and the plastics pipeline surface.

Metal surfaces that can be joined to plastics surfaces by the method of the first aspect of the invention include, for example, all those commonly employed in the pipeline industry, such as iron and its alloys, steels including alloy steels, aluminium and aluminium alloys, copper, copper alloys, brass, chromium, nickel and similar metals and metal alloys.

Plastics surfaces that can be joined to metal surfaces by the method of the first aspect of the invention include surfaces of olefinically unsaturated polymeric materials, for example, polyethylene, polypropylene, polybutene, polybutylene, and higher olefinic polymers; copolymers of ethylene, propylene and butenes with each other and with other olefinically unsaturated monomers; olefinically unsaturated aromatic polymers, such as polystyrene and styrene copolymers; halogenated olefinically unsaturated polymers and copolymers, for example, polyvinyl chloride and vinyl halide polymers; and polymers and copolymers of vinyl monomers such as ethylene vinyl acetate copolymers, and such like materials. Block copolymers and polymer blends of polymerised monomers of any of the abovementioned polymers are also included. Cross-linked polymers and copolymers of any of the abovementioned polymers are also included. A particularly suitable polymeric material is polyethylene, which may be cross-linked or uncross-linked, and this is the preferred polymeric material for use in the present invention.

In this specification the term "hot melt adhesive" is intended to include an adhesive that can be softened by heat and hardened or set by cooling and includes materials that bond to metal surfaces, or to metal and/or plastics surfaces, by adhesive bond formation.

Typically, hot melt adhesives are solvent-free thermoplastic materials that melt or drop in viscosity above about 150°C, preferably 130°C, more preferably above about 100°C, and then rapidly set upon cooling. Reactive hot melt adhesives that are applied as conventional hot melts and then reactively cross-link on heating are also included in the invention.

Suitable hot melt adhesives can be chosen, for example, from the following groups:
- i): Acrylates, for example, ethylene ethyl acrylate or ethylene methyl acrylate copolymers;
- ii): Styrene-isoprene-styrene and styrene-butadiene-styrene copolymers;
- iii): Ethylene - vinyl acetate copolymers;
- iv): Polyamides;
- v): Substituted polyolefins, for example, thermoplastic (TPO) hot melt adhesives based on polyolefin systems; reactive TPO or polyolefin reactive (POR) adhesives comprising cross-linking agents, for example, siloxanes, that form permanent non-remelting bonds;
- vi): Polyurethanes, including hot melt polyurethanes and reactive hot melt polyurethanes that cross-link in the presence of moisture.
- vii): Grafted or substituted polyethylenes with polar pendant chains having, for example, acidic substituents, such as carboxylic acid groups.

Particularly preferred hot melt adhesives include modified LLDPE, especially maleic anhydride modified LLDPE, for example, Yparex OHO49B from DSM.

In addition to the above hot melt adhesives specifically indicated as being cross-linkable, it would also be possible, in appropriate cases, to add thermally activated cross-linking agents to any of the hot melt adhesives and thereby obtain a cross-linked adhesive bond.

In this specification the term "fusible polymeric material" is intended to include a polymeric material that can form bonds to plastics surfaces by fusion or by physical intermingling.

Examples of fusible polymeric materials include olefinically unsaturated polymeric materials, for example, polyethylene, polypropylene, polybutene, polybutylene, and higher olefinic polymers; copolymers of ethylene, propylene and butenes with each other and with other olefinically unsaturated monomers; olefinically unsaturated aromatic polymers, such as polystyrene and styrene copolymers; halogenated olefinically unsaturated polymers and copolymers, for example, polyvinyl chloride and vinyl halide polymers; and polymers and copolymers of vinyl monomers such as ethylene vinyl acetate copolymers, and such like materials. Block copolymers and polymer blends of polymerised monomers of any of the abovementioned polymers are also included. A particularly suitable fusible polymeric material is polyethylene, and this is the preferred fusible polymeric material for use in the present invention. If desired, the fusible polymeric material can also be cross-linkable, or can comprise a thermally activatable cross-linking agent.

The electric heating element is preferably an electric resistance wire, which may be helically or spirally wound. The resistance wire can be single or double wound, for tapping tee mats. The electric resistance wire is preferably lacquer coated or otherwise insulated to avoid short circuits should adjacent turns of wire touch each other, or contact the metal surface of a pipe or fitting, during heating. Where the hot melt adhesive is cross-linkable it may be possible to avoid the need to insulate the wire since the cross-linking may serve to anchor the wire turns and limit unwanted movement. Other configurations are also possible and the electric heating element can comprise, for example, a sheet, preferably a perforated sheet, a mesh, one or more layers of fibres, or any other suitable configuration. The electric heating element can be energised by connecting it to an appropriate source of electric power.

In the second aspect of the invention, the bonding member preferably comprises discrete regions of hot melt adhesive capable of bonding to a metal surface, or to both a metal and a plastics surface, and fusible polymeric material capable of bonding or fusing to a plastics surface. Preferably the hot melt adhesive is compatible with the fusible polymeric material. By "compatible" in this specification is meant that the hot melt adhesive and fusible polymeric material are at least miscible with each other when molten, and preferably form a polymer solution, so that they form a strong bond to each other after heating to their activation temperatures. Preferably the hot melt adhesive and the fusible polymeric material have similar activation temperatures, preferably within 40oC, more preferably within 10oC of each other.

For use in the second aspect of the invention, the hot melt adhesive can be chosen from those amongst the above list of adhesives that form a strong adhesive bond to the metal surface. The fusible polymeric material can be chosen from those amongst the above list that form a bond to, or that fuse to, the plastics surface. Preferred examples of the hot melt adhesive include modified LLDPE, particularly maleic anhydride modified LLDPE. Preferred examples of the fusible polymeric material include polyethylene, polypropylene and polybutylene.

In a preferred embodiment of the second aspect of the invention the electric heating element comprises a coil of electric resistance wire and adjacent turns of the coil are embedded respectively in the hot melt adhesive and the fusible polymeric material, so that regions of the hot melt adhesive are bonded to the metal and plastics surfaces, and regions of the fusible polymeric material are bonded or fused to the plastics surface. Alternatively, the hot melt adhesive and the fusible polymeric material can be arranged in layers, with the hot melt adhesive adjacent the metal surface and the fusible polymeric material adjacent the plastics surface.

By "disposed adjacent thereto or embedded therein" in this specification it is intended to mean that the electric heating element is at least in thermal contact with the hot melt adhesive and the fusible polymeric material (where present) and preferably is wholly or partly embedded in one or other.

The tubular bonding member preferably has the electric heating element either wholly or partly embedded therein. In one embodiment the tubular bonding member can be dimensioned so as to be disposed between adjacent telescoped surfaces of a metal fitting and a plastics pipe in a bell and socket joint assembly. Preferably the tubular adhesive member has a wall thickness of from 0.1 to 5 mm, more preferably from 0.3 to 1 mm.

By "an environmentally resistant tapping tee" in this specification is meant a tapping tee that is made from a material that cannot be fused to a plastics pipeline by electrofusion.

Normally, in the fourth, fifth and sixth aspects of the invention, the tapping tee assembly comprising the environmentally resistant tee and its saddle will be made from metal, for example, from brass, copper, copper alloys, aluminium alloys, stainless steel, or similar materials. Other environmentally resistant materials, such as highly filled plastics material that are suitable for the tapping tee body are not, however, excluded.

The saddle can be of any suitable shape, but is usually an annular disc, curved to conform to the outer wall of the plastics pipeline. It may be provided with one or more sealing rings, although these may in some embodiments be omitted where an adequate seal can be obtained by the adhesive bond or by the combination of an adhesive bond and a fusion bond.

By "mounting" in this specification, is meant a procedure whereby the saddle is positioned on the pipeline in sealing engagement therewith and includes fixing the saddle in position on the pipeline by an adhesive bond or by the combination of an adhesive bond and a fusion bond.

In a first preferred embodiment the electric heating element is embedded in the layer of hot melt adhesive. The hot melt adhesive is chosen such that it is able to form an adhesive bond between the metal saddle and the plastics surface of the pipeline. The hot melt adhesive is activated by energising the electric heating element when the saddle has been placed in position.

In a second preferred embodiment the electric heating element is embedded in a fusible polymeric material to form an electrofusion mat. The electrofusion mat is disposed adjacent to the plastics pipeline surface and a layer of hot melt adhesive is disposed between the mat and the metal saddle. In this embodiment, the electric heating element can perform both the function of activating the hot melt adhesive layer and of fusing the adjacent surfaces of the polymeric electrofusion mat and the pipeline. The activation and fusing can take place sequentially or simultaneously. Alternatively the layer of hot melt adhesive and the electrofusion mat can be provided with separate electric heating elements.

The electrofusion mat can comprise an annular disc of the fusible polymeric material having a spirally wound electric heating element wholly or partly embedded therein. Suitable fusible polymeric materials can be chosen from those amongst the above list that form a bond to, or that fuse to, the plastics surface. Examples of suitable electrofusion mats and methods for their manufacture are described in US Patents 4933037 and 5104468 (Riesselmann) the entire disclosures of which are incorporated herein by reference for all purposes.

The hot melt adhesive can be applied to the saddle, or to the electrofusion mat where present, or both, by conventional hot melt application techniques. Where the electrofusion mat is present, the saddle and the mat can be held under light pressure until a firm adhesive bond is formed between the saddle and the mat.

Preferably the layer of hot melt adhesive applied to the saddle and/or the mat is less than 5 mms thick, preferably from 0.1 to 1.0 mm thick.

The saddle can be positioned on the plastics pipeline and if necessary held in place whilst the electric heating element is energised to activate the hot melt adhesive, or to bring the electrofusion mat to its fusion temperature, or both, to mount the saddle on the pipeline.

Typically the tapping tee comprises a hollow body provided with an axial bore, a cutter disposed within the bore of the hollow body and adapted to travel through the bore and into contact with the pipeline wall and to cut a hole therein, and a spigot integral with the body and in fluid connection with the axial bore, the spigot being adapted to be joined to a service pipe and thereby connect, for example, a fluid main (either gas or water) to a domestic system.

In some embodiments of the tapping tee assembly the saddle is integral with the tapping tee body, but this is not essential. It is equally possible and sometimes may be preferable, for example, to provide the saddle as a separate component that is connected to the tapping tee body, for example, by cooperating screw threads on the saddle and the body, or by bolts, or by any other suitable mechanical connection.

Where a polymeric electrofusion mat is present and bonded to the saddle by the hot melt adhesive, preferably the hot melt adhesive is chosen so that it does not substantially melt and flow during the electrofusion step, although some melting during electrofusion is acceptable since the hot melt adhesive will readily re-harden and set upon cooling.

Whilst it may be necessary to use a strap or clamp to maintain the position of the saddle during mounting of the saddle on the pipeline, only light pressure is required. Preferably the strap or clamp remains in place after mounting to provide additional mechanical support for the tapping tee assembly. In a preferred embodiment the strap or clamp and the saddle cooperate so as to encircle the pipeline. For example, the strap or clamp and the saddle can comprise two half circular sections of a split ring mechanical clamp that are bolted or otherwise connected together.

After mounting the saddle on the pipeline, the tapping tee body is connected to the saddle (unless of course the tapping tee body is integral with the saddle). A cutter is disposed in the bore of the tapping tee body and forwarded along the bore to cut a hole in the pipeline to enable a branch pipe connection to be made in the usual way.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### BRIEF DESCRIPTION OF THE DRAWINGS

Embodiments of an assembly of a metal fitting and a plastics pipe, of a bonding member and of a saddle and tapping tee assembly in accordance with various aspects of the invention will now be described and illustrated, by way of example only, with reference to the accompanying Drawings in which:
Figure 1 (a) shows in fragmentary sectional side elevation a first embodiment of a bell and socket joint assembly in accordance with the invention;
Figure 1 (b) shows in fragmentary sectional side elevation a second embodiment of a bell and socket joint assembly comprising a bonding member in accordance with the invention;
Figure 2 (a) shows in fragmentary sectional side elevation a first embodiment of a tapping tee saddle in accordance with the invention;
Figure 2 (b) shows in fragmentary sectional side elevation a second embodiment of a tapping tee saddle comprising a bonding member in accordance with the invention;
Figure 3 shows in sectional side elevation a first embodiment of a saddle and tapping tee assembly mounted on a pipeline; and
Figure 4 shows in sectional side elevation a second embodiment of a saddle and tapping tee assembly mounted on a pipeline.

### DETAILED DESCRIPTION

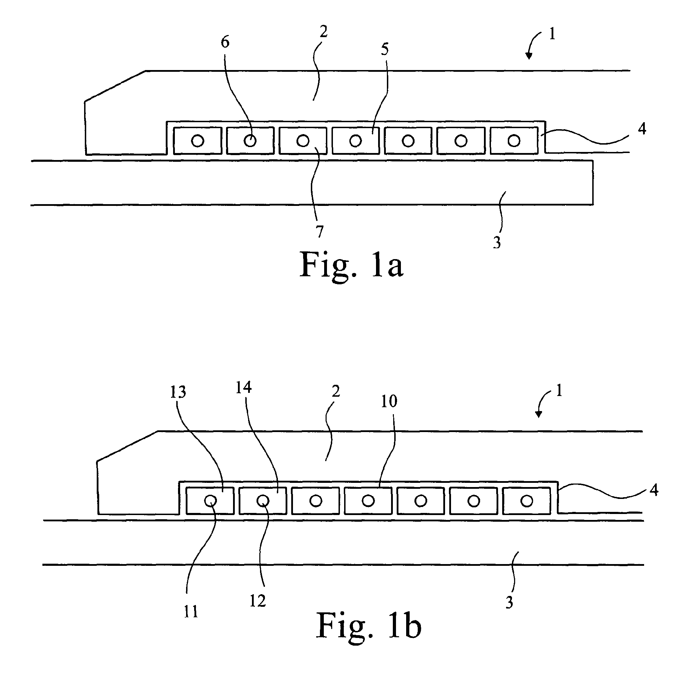

Referring firstly to Figure 1 (a), the bell and socket joint assembly illustrated generally at 1 comprises a metal socket 2 into which there is inserted a spigot end of a plastics pipe 3. The socket 2 is provided with an annular recess 4 within which there is disposed a tubular adhesive member 5. The tubular adhesive member 5 is formed by embedding a lacquered electric resistance heating wire 6 in a hot melt adhesive sheath 7 and forming the sheathed wire into a coil. When the electric heating wire 6 is energised, the hot melt adhesive 7 is activated and forms respectively strong bonds to the metal and plastics surfaces of the socket 2 and the plastics pipe 3. It will be appreciated that in this embodiment the metal socket 2 could equally be made from a plastics material and the pipe 3 could be a metal pipe.

Referring next to Figure 1 (b), where the same features have the same numerals as in Figure 1 (a), the tubular bonding member 10 is formed by embedding two lacquered electric resistance wires 11 and 12 in respectively sheaths of a hot melt adhesive 13 and a fusible polymeric material 14. The sheathed wires are then formed into a coil to form the bonding member 10 in which alternating turns of the coil are embedded in sections of the hot melt adhesive 13 and fusible polymeric material 14 respectively.

When the electric heating wires 11 and 12 are energised, the hot melt adhesive 13 is activated and form respectively strong bonds to the metal and plastics surfaces of the socket 2 and the plastics pipe 3, and the fusible polymeric material 14 fuses to the surface of the plastics pipe 3. As with Figure 1 (a), in Figure 1 (b) the metal socket 2 could equally be made from a plastics material and the pipe 3 could be a metal pipe.

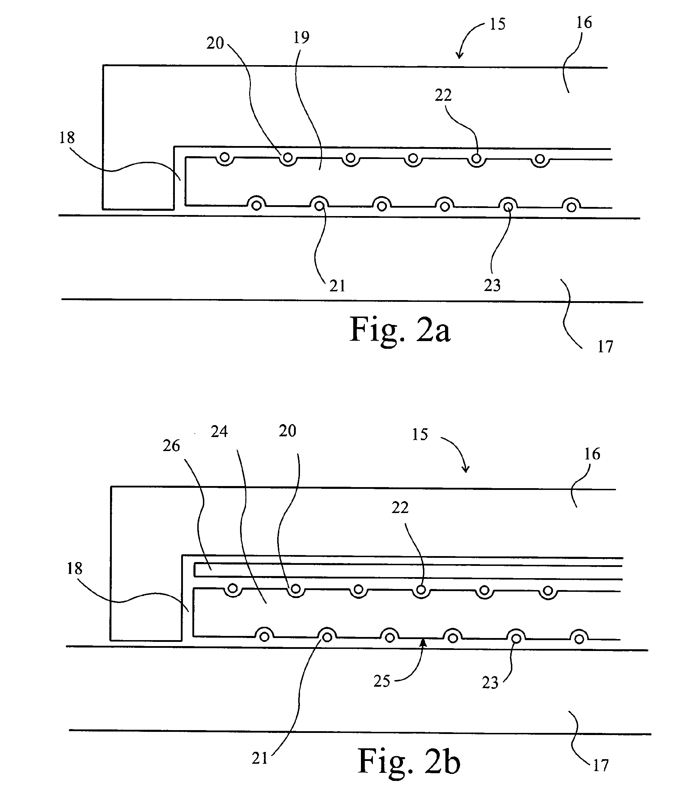

Referring now to Figure 2 (a), the tapping tee saddle illustrated generally at 15 comprises an annular metal saddle 16 which is disposed on a plastics pipeline 17. The saddle 16 is provided with an annular recess 18 within which there is disposed an annular adhesive member 19. The annular adhesive member 19 has spiral grooves 20, 21 on its upper and lower surfaces within which are disposed spiral lacquered electric resistance heating wires 22, 23. When the electric heating wires 22, 23 are energised, the hot melt adhesive member 19 is activated and forms strong adhesive bonds to the metal and plastics surfaces of the saddle 16 and the plastics pipeline 17 respectively. It will be appreciated that in this embodiment the metal saddle 16 could equally be made from a plastics material and the pipeline 17 could be a metal pipe.

Referring next to Figure 2 (b), where the same features have the same numerals as in Figure 2 (a), the annular adhesive member 19 of Figure 2 (a) is replaced in this embodiment by an identically shaped annular fusible polymeric member 24. The annular fusible polymeric member 24 is similarly provided with spiral grooves 20, 21 and spiral lacquered heating wires 22, 23, the arrangement forming an electrofusion mat 25. An annular disc of hot melt adhesive 26 is disposed between the electrofusion mat 25 and the surface of the metal saddle 16.

When the electric heating wires 22 and 23 are energised, the hot melt adhesive 26 is activated and forms respectively strong bonds to the metal saddle 16 and electrofusion mat 25, and the fusible polymeric member 24 fuses to the surface of the plastics pipeline 17.

It will be appreciated that in the embodiment of Figure 2 (b) the metal saddle 16 could equally be made from a plastics material and the pipeline 17 could be a metal pipe, whereupon the respective positions of the electrofusion mat and the hot melt adhesive disc would need to be reversed.

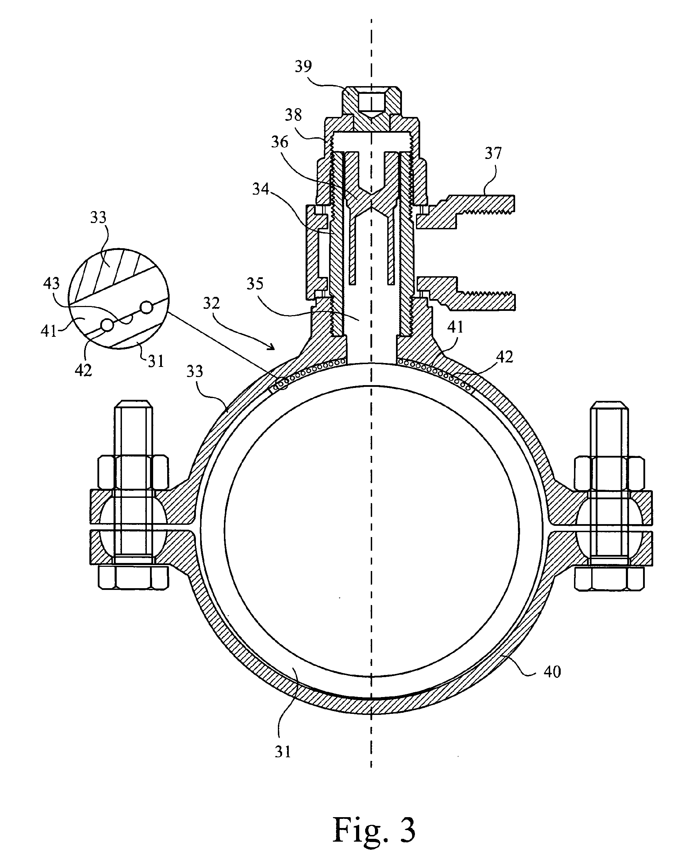

Referring next to Figure 3, there is shown a pipeline 31 upon which there is mounted a tapping tee assembly illustrated generally at 32. The tapping tee assembly comprises a metal saddle 33, a tapping tee body 34 having a screw threaded bore 35 within which is positioned a cutter 36, and a stub pipe 37 having a fluid connection (not shown) to the bore 35. The body 34 is surmounted by a cap 38 provided with a threaded stopper 39.

The saddle 33 is bolted to a cooperating clamping member 40 so that the saddle 33 and clamping member 40 form a split ring clamp for positioning the saddle 33 and tee body 34 on the pipeline. Between the saddle 33 and the pipeline 31 there is disposed a layer of hot melt adhesive 41 having a spiral wound electric heating element 42 partly embedded therein. The heating element 42 is positioned on the surface 43 of the layer of hot melt adhesive 41 further from the metal surface of the saddle 33. This minimises the risk of shorting and can allow the use of non-lacquered wire in favourable circumstances.

In mounting the tapping tee assembly on the pipeline 31, the saddle 33, having the layer of hot mount adhesive 41 and electric heating element 42 adhered thereto, is first positioned on the pipeline and bolted to the clamping member 40. Only light pressure is required to retain the saddle 33 in position, since the pressure is not required to form a seal between the saddle and the pipeline. The electric heating element 42 is then energised in order to melt the hot melt adhesive layer 41 and form an adhesive bond between the saddle 33 and the pipeline 31.

After the hot melt adhesive has cooled and solidified, the tapping tee body can be threadedly connected to the saddle and the tapping procedure continued in the usual way. Briefly, the stopper 39 is removed, in order that a drive shaft can be inserted into the bore 35 to rotate the cutter 36, which travels down the threaded bore, ultimately cutting a hole in the pipeline 31. The cutter is then rotated in the reverse direction, opening a fluid passage between the pipeline 31, the bore 35 and the stub pipe 37. Finally, the cutter is removed and the stopper 39 replaced.

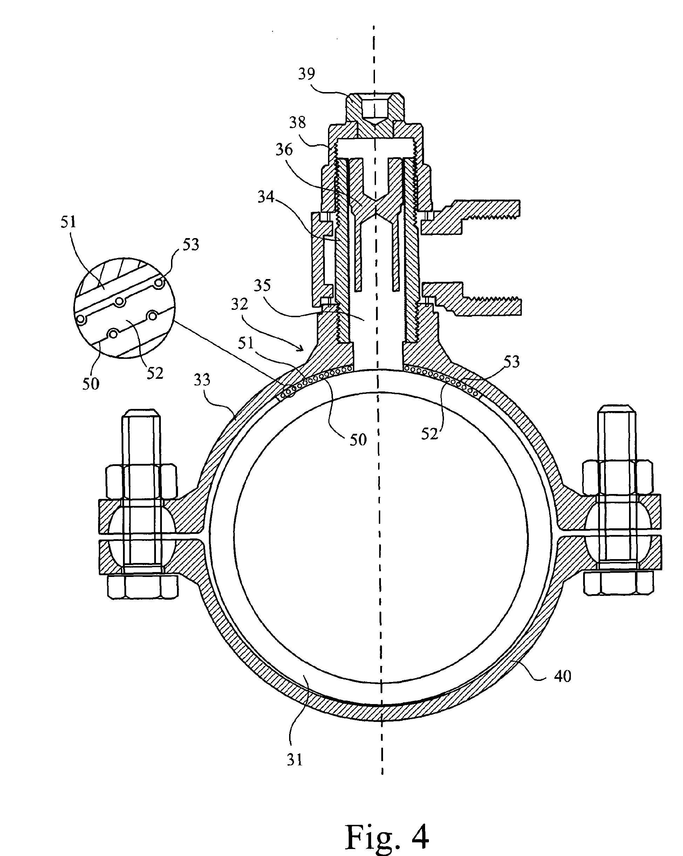

Referring next to Figure 4, identical parts of the tapping tee assembly have the same numbers as in Figure 3. In this embodiment, the hot melt adhesive layer 41 and electric heating element 42 of Figure 3 are replaced by electrofusion mat 50 and hot melt adhesive layer 51. The electrofusion mat 50 comprises a polyethylene layer 52 and double wound spiral electric heating wire 53. As shown in the inset drawing, the spiral heating wire 53 is positioned in spiral grooves in the upper and lower surfaces of the polyethylene layer 52.

In mounting the tapping tee assembly on the pipeline the same procedure as in the embodiment of Figure 3 is followed. However, in this case, when the electric heating wire 53 is energised the hot melt adhesive layer 51 melts and forms a bond between the saddle 33 and the polyethylene layer 52. At the same time, or shortly thereafter, the polyethylene layer 52 fuses and forms a fusion bond between the adhesive layer 51 and the surface of the pipeline 31.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method for joining a metal surface to a plastics surface, which comprises disposing between the surfaces a hot melt adhesive member and an electric heating element, and energising the electric heating element to activate the hot melt adhesive and form an adhesive bond between the metal surface and the plastics surface.

2. A method according to claim 1, wherein the metal surface comprises one or more of iron and its alloys, steels including alloy steels, aluminium and its alloys, copper, copper alloys, brass, chromium and its alloys and nickel and its alloys.

3. A method according to claim 1 or 2, wherein the plastics surface comprises one or more of surfaces of aliphatic unsaturated olefinic polymers and copolymers; olefinically unsaturated aromatic polymers; halogenated olefinically unsaturated polymers and copolymers; and polymers and copolymers of vinyl monomers; block copolymers and polymer blends of polymerised monomers of any of the said polymers; and cross-linked polymers and copolymers of any of the said polymers.

4. A method according to any one of the preceding claims, wherein the plastics surface is a surface of polyethylene, polypropylene, polybutene, polybutylene, and higher olefinic polymers; copolymers of ethylene, propylene and butenes with each other and with other olefinically unsaturated monomers; polystyrene and styrene copolymers; polyvinyl chloride and vinyl halide polymers; and ethylene vinyl acetate copolymers.

5. A method according to claim 3 or 4, wherein the plastics surface is a polyethylene surface.

6. A method according to any one of the preceding claims, wherein the hot melt adhesive is selected from acrylates, styrene copolymers, ethylene vinyl acetate copolymers, polyamides, grafted or substituted polyolefins, and polyurethanes.

7. A method according to claim 6, wherein the hot melt adhesive is cross-linkable or contains a thermally activatable cross-linking agent.

8. A method according to claim 7, wherein the hot melt adhesive is a modified polyethylene.

9. A method according to any one of the preceding claims, wherein the electric heating element comprises a helically or spirally wound electric resistance wire.

10. A tubular bonding member for forming a joint between a plastics pipe and a metal pipe or fitting, the bonding member comprising:
(a) a hot melt adhesive capable of bonding to a metal surface, or to both a metal surface and a plastics surface; and
(b) a fusible polymeric material capable of bonding or fusing to a plastics surface,
the bonding member having an electric heating element adjacent thereto or embedded therein.

11. A bonding member according to claim 10, wherein the hot melt adhesive and the fusible polymeric material are compatible.

12. A bonding member according to claim 10 or 11, wherein the hot melt adhesive and the fusible polymeric material have similar activation temperatures.

13. A bonding member according to any one of claims 10 to 12, wherein the hot melt adhesive and the fusible polymeric material have activation temperatures within 20°C of each other.

14. A bonding member according to any one of claims 10 to 13, wherein the hot melt adhesive is selected from acrylates, styrene copolymers, ethylene vinyl acetate copolymers, polyamides, grafted or substituted polyolefins, and polyurethanes.

15. A bonding member according to any one of claims 10 to 14, wherein the hot melt adhesive is cross-linkable or contains a thermally activatable cross-linking agent.

16. A bonding member according to any one of claims 10 to 15, wherein the hot melt adhesive is a modified polyethylene.

17. A bonding member according to any one of claims 10 to 16, wherein the fusible polymeric material comprises polyethylene, polypropylene, polybutene, polybutylene, and higher olefinic polymers; copolymers of ethylene, propylene and butenes with each other and with other olefinically unsaturated monomers; olefinically unsaturated aromatic polymers; halogenated olefinically unsaturated polymers and copolymers; polymers and copolymers of vinyl monomers; and block copolymers and polymer blends of polymerised monomers of any of the said polymers.

18. A bonding member according to any one of claims 10 to 17, wherein the fusible polymeric material is polyethylene.

19. A bonding member according to any one of claims 10 to 18, wherein the electric heating element comprises a coil of electric resistance wire and adjacent turns of the coil are embedded respectively in the hot melt adhesive and the fusible polymeric material, so that regions of the hot melt adhesive are bonded to the metal and plastics surfaces, and regions of the fusible polymeric material are bonded or fused to the plastics surface.

20. A bonding member according to any one of claims 10 to 19, wherein the hot melt adhesive and the fusible polymeric material are arranged in layers, with the hot melt adhesive adjacent the metal surface and the fusible polymeric material adjacent the plastics surface.

21. A bonding member according to any one of claims 10 to 20, wherein the bonding member has a tubular wall thickness of from 0.1 to 5 mm.

22. An assembly of a metal fitting and a plastics pipe, wherein there is disposed between the fitting and the pipe a hot melt adhesive member, the hot melt adhesive member having disposed adjacent thereto or embedded therein an electric heating element.

23. An assembly according to claim 22, wherein the hot melt adhesive member is a bonding member as claimed in any one of claims 10 to 21.

24. A metal saddle for an environmentally resistant tapping tee assembly, wherein the saddle is provided with an electric heating element and proximate thereto a layer of hot melt adhesive and a layer of fusible polymeric material, whereby the saddle can be mounted on a plastics pipeline.

25. A saddle according to claim 24, wherein the electric heating element is embedded in the layer of fusible polymeric material

26. A saddle according to claim 25, wherein the electric heating element is embedded in an electrofusion mat.

27. A saddle according to claim 26, wherein the layer of hot melt adhesive is disposed between the saddle and the electrofusion mat.

28. A saddle according to claim 26 or 27, wherein the electrofusion mat comprises a layer of polyethylene.

29. A saddle according to any one of claims 24 to 28, wherein the electric heating element comprises a spirally wound electric resistance wire.

30. A saddle according to any one of claims 24 to 29, wherein the hot melt adhesive is selected from acrylates, styrene copolymers, ethylene vinyl acetate copolymers, polyamides, grafted or substituted polyolefins, and polyurethanes.

31. A saddle according to any one of claims 24 to 30, wherein the layer of hot melt adhesive has a thickness of from 0.1 to 1.0 mm.

32. A saddle according to any one of claims 24 to 31, provided with a clamping member such that the saddle and the clamping member comprises a split ring mechanical clamp adapted to encircle the pipeline.

33. A saddle according to any one of claims 24 to 32, wherein the tapping tee assembly comprises the saddle and a tapping tee body adapted to be connected to the saddle.

34. A saddle according to claim 33, wherein the saddle and the tapping tee body are connected by cooperating screw threads.

35. A tapping tee assembly comprising a saddle according to any one of claims 24 to 34.

36. A method of mounting an environmentally resistant tapping tee assembly on a plastics pipeline, which comprises mounting a metal saddle on the pipeline by activating a layer of hot melt adhesive disposed between the saddle and the pipeline with an electric heating element.

37. A method according to claim 36, wherein there is used a saddle according to any one of claims 24 to 34, or a tapping tee assembly according to claim 35.
